# FASCICULE DE BREVET EUROPEEN

(11) **EP 3 601 876 B1**
(45) Date de publication et mention de la délivrance du brevet: **16.02.2022**
(21) Numéro de dépôt: 18714302.9
(22) Date de dépôt: 13.03.2018
(51) Int. Cl.: F21S 45/60, F21S 45/33

(54) **DISPOSITIF APTE À ÊTRE UTILISÉ POUR DÉSHUMIDIFIER UN BOÎTIER FERMÉ DE PROJECTEUR DE VÉHICULE OU POUR PRÉVENIR L'APPARITION D'HUMIDITÉ DANS LEDIT BOÎTIER FERMÉ**
VORRICHTUNG, GEEIGNET ZUR VERWENDUNG ZUR ENTFEUCHTUNG EINES GESCHLOSSENEN FAHRZEUGSCHEINWERFERGEHÄUSES ODER ZUR VERHINDERUNG DES AUFTRETENS VON FEUCHTIGKEIT IN BESAGTEM GESCHLOSSENEN GEHÄUSE
DEVICE SUITABLE FOR BEING USED TO DEHUMIDIFY A CLOSED VEHICLE HEADLAMP HOUSING OR FOR PREVENTING MOISTURE FROM OCCURRING IN SAID CLOSED HOUSING

(30) Priorité: 28.03.2017 FR 1752575
(43) Date de publication de la demande: 05.02.2020
(73) Titulaire: AML Systems, 75008 Paris (FR)
(72) Inventeur: KOULOUH, Hassan, 93310 Le Pré Saint Gervais (FR); RIVIER, Cyril, Hong Kong (HK)
(74) Mandataire: Doherty, William
(86) Numéro de dépôt international: PCT/FR2018/050586
(87) Numéro de publication internationale: WO 2018/178532

(56) Documents cités:
- EP-A2- 1 818 609
- DE-A1-102006 028 295
- DE-A1-102015 203 888

## Description

### DOMAINE TECHNIQUE

La présente invention se rapporte au domaine des projecteurs de véhicule à boîtier fermé, et plus particulièrement à un dispositif apte à être utilisé pour déshumidifier un boîtier fermé de projecteur de véhicule.

### ÉTAT DE LA TECHNIQUE

Les projecteurs constituent un élément important dans la sécurité des véhicules, en particulier lorsque le véhicule est conduit de nuit ou lorsqu'il est conduit dans des conditions atmosphériques nécessitant l'utilisation d'un éclairage.

Généralement, un projecteur de véhicule comprend un boîtier fermé par une glace et dans lequel est logée une source lumineuse. Le boîtier n'étant pas souvent étanche, de l'humidité peut entrer dans le boîtier et se condenser sur la glace. Cette condensation a une influence sur l'efficacité d'éclairage du projecteur.

Document DE 10 2006 028295 A1 décrit un projecteur de véhicule ayant un dispositif d'absorption d'humidité. Ce document décrit que le projecteur a un espace intérieur formé par un boîtier et une glace de protection. Un dispositif d'absorption d'humidité est prévu dans une zone entre l'espace intérieur et l'environnement adjacent. Le dispositif absorbe de manière sélective l'humidité de l'espace intérieur et délivre l'humidité à l'environnement.

Document EP1818609A2 décrit un dispositif de séchage pour des dispositifs d'éclairage ou électroniques. Ce document décrit que le dispositif a un élément d'ajustement électronique qui est mobile entre une position d'adsorption et une position de désorption. Une partie d'un agent desséchant est en contact avec l'air intérieur lorsque temporairement dans la position d'adsorption pour adsorber l'humidité et est en contact avec l'air extérieur lorsque temporairement dans la position de désorption pour libérer l'humidité de l'air.

### EXPOSÉ DE L'INVENTION

La présente invention a pour objet un dispositif apte à être utilisé pour déshumidifier ou pour prévenir l'apparition d'humidité dans un boîtier fermé de projecteur de véhicule, qui pallie l'inconvénient cité ci-dessus.

À cet effet, l'invention concerne un dispositif apte à être utilisé pour déshumidifier un boîtier fermé de projecteur de véhicule ou pour prévenir l'apparition d'humidité dans ledit boîtier fermé.

Selon l'invention, le dispositif comprend :
- une première boîte définissant une première chambre, la première boîte comportant au moins deux séries d'orifices, chacune des séries d'orifices comprenant au moins un orifice, une première série d'orifices étant configurée pour que la première chambre communique avec l'intérieur du boîtier fermé et une deuxième série d'orifices étant configurée pour que la première chambre communique avec l'extérieur du boîtier fermé,
- au moins un premier volet configuré pour alternativement ouvrir le ou les orifices de la première série d'orifices ou fermer de manière étanche le ou les orifices de la première série d'orifices,
- un module d'actionnement configuré pour que le ou les premiers volets ferment le ou les orifices de la première série d'orifices lorsque le module d'actionnement est activé,
- un élément chauffant configuré pour émettre de la chaleur lorsque le module d'actionnement est activé;
- une deuxième boîte définissant une deuxième chambre, la deuxième boîte étant configurée pour que la deuxième chambre communique avec la première chambre par la deuxième série d'orifices, la deuxième boîte comprenant une troisième série d'orifices configurée pour que la deuxième chambre communique avec l'extérieur du boîtier fermé.

Ainsi, le dispositif, qui peut être associé à un absorbeur d'humidité, permet que l'humidité risquant de se condenser sur la glace du boîtier peut être évacuée par le deuxième orifice de manière efficace, grâce au premier volet qui empêche l'humidité, qui est entrée dans boîte, de sortir.

De plus, le dispositif comprend au moins un deuxième volet configuré pour, alternativement :
- ouvrir la deuxième série d'orifices lorsque le ou les premiers volets ferment la première série d'orifices, ou
- fermer la deuxième série d'orifices lorsque le ou les premiers volets ouvrent la première série d'orifices.

Selon premier exemple, le module d'actionnement comprend :
- un sous-module de fermeture configuré pour fermer la première série d'orifices par le ou les premiers volets quand ledit module d'actionnement est activé,
- un sous-module de rappel configuré pour amener le ou les premiers volets à ouvrir la première série d'orifices, quand ledit module d'actionnement est inactivé.

Par ailleurs :
- le sous-module de fermeture est également configuré pour ouvrir la deuxième série d'orifices par le ou les deuxièmes volets quand ledit module d'actionnement est activé,
- le sous-module de rappel est également configuré pour amener le ou les deuxièmes volets à fermer la deuxième série d'orifices quand ledit module d'actionnement est inactivé.

Selon un deuxième exemple, le ou les premiers volets comprennent une première plaque parallèle à un plan contenant la première série d'orifices, la première plaque comprenant au moins une première partie ouverte et au moins une première partie obturante,
le module d'actionnement étant configuré pour déplacer la première plaque parallèlement au plan contenant la première série d'orifices de façon que la première plaque occupe alternativement au moins l'une ou l'autre des positions suivantes :
- une première position dans laquelle la ou les premières parties ouvertes entrent en coïncidence avec la ou les orifices de la première série d'orifices pour ouvrir les orifices de première série d'orifices, ou
- une deuxième position dans laquelle la ou les premières parties obturantes entrent en coïncidence avec la ou les orifices de la première série d'orifices pour fermer les orifices de la première série d'orifices.

Par ailleurs, le ou les deuxièmes volets comprennent une deuxième plaque parallèle à un plan contenant la deuxième série d'orifices, la deuxième plaque comprenant au moins une deuxième partie ouverte et au moins une deuxième partie obturante,
le module d'actionnement étant également configuré pour déplacer la deuxième plaque parallèlement au plan contenant la deuxième série d'orifices de façon que la deuxième plaque occupe alternativement au moins l'une ou l'autre des positions suivantes :
- une première position dans laquelle la ou les deuxièmes parties ouvertes entrent en coïncidence avec la ou les orifices de la deuxième série d'orifices pour ouvrir les orifices de deuxième série d'orifices, lorsque la première plaque est dans sa deuxième position, ou
- une deuxième position dans laquelle la ou les deuxièmes parties obturantes entrent en coïncidence avec la ou les orifices de la deuxième série d'orifices pour fermer les orifices de la deuxième série d'orifices, lorsque la première plaque est dans la première position.

Selon un troisième exemple, le ou les premiers volets comprennent une première plaque obturante parallèle à un plan contenant la première série d'orifices,
le module d'actionnement étant configuré pour déplacer la première plaque obturante selon une normale du plan contenant la première série d'orifices de façon que la première plaque obturante occupe au moins l'une ou l'autre des positions suivantes :
- une première position dans laquelle la première plaque obturante est plaquée contre la ou les orifices de la première série d'orifices pour fermer les orifices de première série d'orifices, ou
- une deuxième position dans laquelle la première plaque obturante est éloignée de la ou des orifices de la première série d'orifices pour ouvrir les orifices de la première série d'orifices.

Par ailleurs, le ou les deuxièmes volets comprennent une deuxième plaque obturante parallèle à un plan contenant la deuxième série d'orifices,
le module d'actionnement étant également configuré pour déplacer la deuxième plaque obturante selon une normale du plan contenant la deuxième série d'orifices de façon que la deuxième plaque obturante occupe au moins l'une ou l'autre des positions suivantes :
- une première position dans laquelle la deuxième plaque obturante est plaquée contre la ou les orifices de la deuxième série d'orifices pour fermer les orifices de deuxième série d'orifices lorsque que la première plaque obturante est dans sa deuxième position, ou
- une deuxième position dans laquelle la deuxième plaque obturante est éloignée contre la ou les orifices de la deuxième série d'orifices pour ouvrir les orifices de la deuxième série d'orifices lorsque que la première plaque obturante est dans sa première position.

Selon une autre particularité, l'élément chauffant correspond à un composant du module d'actionnement apte à chauffer lorsque le sous-module d'actionnement est activé.

Par exemple, l'élément chauffant comprend une résistance thermique.

De plus, la résistance thermique est configurée pour fonctionner en circuit ouvert lorsqu'elle atteinte une température prédéterminée.

Selon un autre exemple, l'élément chauffant comprend un élément électromagnétique.

Selon un mode de réalisation, le dispositif comprend une membrane obturant le ou les orifices de la troisième série d'orifices, la membrane étant configurée pour laisser sortir de boîte la vapeur d'eau comprise dans la deuxième chambre ou la première chambre.

L'invention concerne également un projecteur de véhicule comprenant un boîtier fermé par une glace et logeant au moins une source lumineuse.

Selon l'invention, le boîtier comprend une paroi à travers laquelle est fixée un dispositif apte à être utiliser pour déshumidifier ledit boîtier ou pour prévenir l'apparition d'humidité dans ledit boîtier fermé tel que décrit ci-dessus, l'intérieur du boîtier communiquant avec la première chambre de la première boîte dudit dispositif par la première série d'orifices, l'extérieur du boîtier communiquant avec la première chambre par la deuxième série d'orifices.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue en perspective du dispositif de déshumidification et de prévention à l'apparition d'humidité du côté de la première série d'orifices selon un mode de réalisation,
- la figure 2 représente une vue en perspective du dispositif du côté de la deuxième série d'orifices selon le mode de réalisation de la figure 1,
- la figure 3 représente une vue en perspective du dispositif du côté de la première série d'orifices avec un premier volet ouvrant la première série d'orifices selon le mode de réalisation de la figure 1,
- la figure 4 représente une vue en perspective du dispositif du côté de la première série d'orifices, dans laquelle le module d'actionnement est visible selon le mode de réalisation de la figure 1,
- la figure 5 représente une vue en perspective du dispositif du côté de la première série d'orifices, dans laquelle l'élément chauffant est visible selon le mode de réalisation de la figure 1,
- la figure 6 représente une vue schématique d'un projecteur de véhicule comprenant le dispositif,
- la figure 7 représente une vue en perspective du dispositif du côté de la première série d'orifices selon un autre mode de réalisation,
- la figure 8 représente une vue de profile des volets et du module d'actionnement selon le mode de réalisation de la figure 7,
- la figure 9 représente une vue en perspective du dispositif du côté de la deuxième série d'orifices selon le mode de réalisation de la figure 7,
- la figure 10 représente une vue en éclaté du dispositif selon le mode de réalisation de la figure 7,
- la figure 11 représente une vue en perspective du dispositif du côté de la première série d'orifices selon un autre mode de réalisation,
- la figure 12 représente une vue en éclaté du dispositif selon le mode de réalisation de la figure 11,
- la figure 13 représente une vue de profil d'une coupe du dispositif dans lequel le ou les premiers volets ferment la première série d'orifices selon le dispositif de la figure 11,
- la figure 14 représente une vue de profil d'une coupe du dispositif dans lequel le ou les deuxièmes volets ferment la deuxième série d'orifices selon le dispositif de la figure 11.

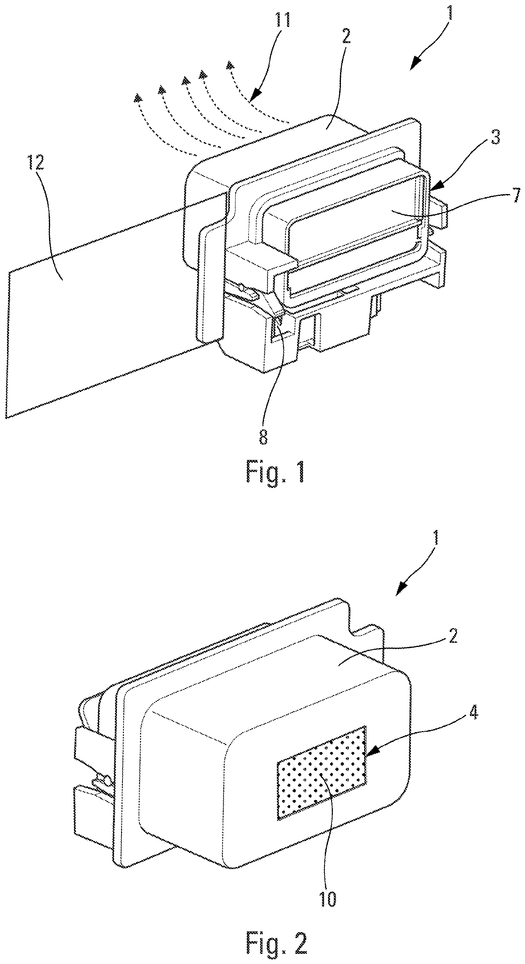

Les modes de réalisation des figures 1-6 et 11-14 ne font pas partie de l'invention.

### DESCRIPTION DÉTAILLÉE

La suite de la description fera référence aux figures citées ci-dessus.

L'invention concerne un dispositif 1 actif. Ledit dispositif 1 est apte à être utilisé pour déshumidifier un boîtier fermé 15, en particulier, un boîtier 15 de projecteur de véhicule 16. Ledit dispositif 1 est également apte à prévenir l'apparition d'humidité dans le boîtier fermé 15.

Dans la suite de la description, le « dispositif apte à être utilisé pour déshumidifier un boîtier fermé ou pour prévenir l'apparition d'humidité dans ledit boîtier fermé » est appelé « dispositif » (figures 1 à 5).

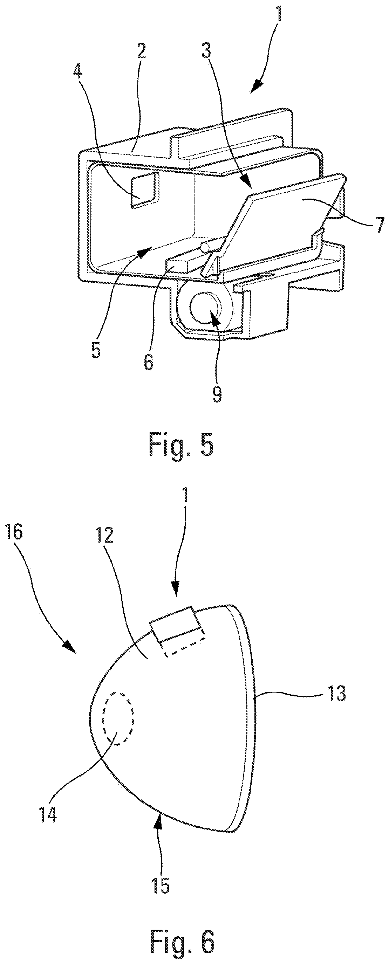

Le dispositif 1 comprend une boîte 2 définissant une chambre 5 à l'intérieur de la boîte 2. La boîte 2 est pourvue d'au moins deux séries d'orifices 3 et 4. Chacune des séries d'orifices 3 et 4 comprend au moins un orifice. Une série d'orifices 3 est configurée pour que la chambre 5 de la boîte 2 communique avec l'intérieur du boîtier fermé 15. Une série d'orifices 4 est configurée pour que la chambre 5 de la boîte 2 communique avec l'extérieur du boîtier fermé 15 (figure 5).

Un milieu qui communique avec un autre milieu signifie qu'il peut exister un échange de fluide tel que la vapeur d'eau entre les deux milieux.

Dans un mode de réalisation, le dispositif 1 comprend également un absorbeur d'humidité 6 agencé dans la chambre 5 de la boîte 2. L'absorbeur d'humidité 6 est apte à absorber l'humidité présente dans la chambre 5 de la boîte 2 (figure 5). Par exemple, l'absorbeur d'humidité 6 comprend du gel de silice. Toutefois, l'absorbeur d'humidité peut comprendre tout type de composé ou de système permettant l'absorption d'au moins une partie de l'humidité pouvant être contenue dans la boîte 2.

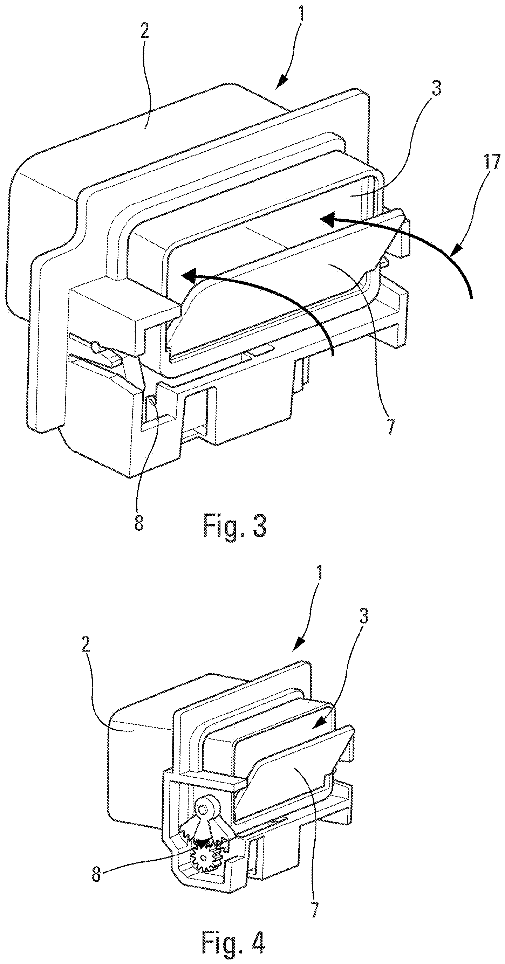

Le dispositif 1 comprend un module d'actionnement 8 et au moins un volet 7 configuré pour, alternativement, ouvrir le ou les orifices de la série d'orifices 3 ou fermer de manière étanche le ou les orifices de la série d'orifices 3. Le module d'actionnement 8 est configuré pour contrôler le ou les volets 7, c'est-à-dire, il contrôle le ou les volets 7 pour qu'ils ferment le ou les orifices de la série d'orifice 3 lorsque ledit module d'actionnement 8 est activé (figure 4).

Par ailleurs, le dispositif 1 comprend un élément chauffant 9 configuré pour émettre de la chaleur lorsque le module d'actionnement 8 est activé.

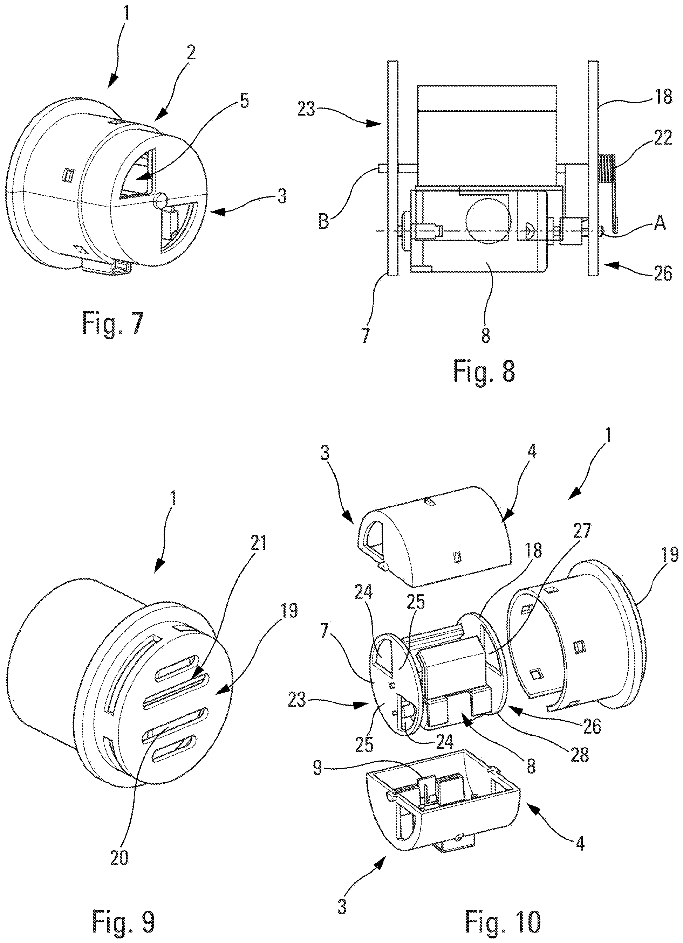

Selon un mode de réalisation (figures 7 à 14), le dispositif comprend au moins un deuxième volet 18 configuré pour, alternativement :
- ouvrir la deuxième série d'orifices 4 lorsque le ou les premiers volets 7 ferment la première série d'orifices 3, ou
- fermer la deuxième série d'orifices 4 lorsque le ou les premiers volets 7 ouvrent la première série d'orifices 3.

Selon une mode de réalisation préféré, le dispositif 1 comprend en outre une boîte 19 définissant une chambre 20. La boîte 19 est configurée pour que la chambre 20 communique avec la chambre 5 par la série d'orifices 4. La boîte 19 comprend une série d'orifices 21 configurée pour que la chambre 19 communique avec l'extérieur du boîtier fermé 15.

Selon un premier exemple (figures 1 à 5), le module d'actionnement 8 comprend :
- un sous-module de fermeture configuré pour fermer la série d'orifices 3 par le ou les volets 7 quand le module d'actionnement 8 est activé,
- un sous-module de rappel, tel qu'un ressort, configuré pour amener le ou les volets 7 à ouvrir la série d'orifices 3 quand le module d'actionnement 8 est inactivé.

Dans ce premier exemple, lorsque le module d'actionnement 8 est activé, le sous-module de fermeture exerce une force agissant contre la force exercée par le sous-module de rappel afin que le ou les volets 7 ferment la série d'orifices 3.

Selon une variante du premier exemple, le sous-module de fermeture du module d'actionnement 8 est également configuré pour ouvrir la série d'orifices 4 par le ou les volets 18 quand ledit module d'actionnement 8 est activé. De plus, le sous-module de rappel est également configuré pour amener le ou les volets 18 à fermer la deuxième série d'orifices 4 quand ledit module d'actionnement 8 est inactivé.

Selon un deuxième exemple (figures 7 à 10), le ou les volets 7 comprennent une plaque 23 parallèle à un plan contenant la série d'orifices 3. La plaque 23 comprend au moins une partie ouverte 24 et au moins une partie obturante 25. Par exemple, la plaque 23 correspond à une plaque pleine comprenant des ouvertures. La ou les parties ouvertes 24 correspondent à une ou des ouvertures. La ou les parties obturantes 25 correspondent aux parties entre la ou les ouvertures.

Dans ce deuxième exemple, le module d'actionnement 8 est configuré pour déplacer la plaque 23 parallèlement au plan contenant la série d'orifices 3 de façon que la plaque 23 occupe alternativement au moins l'une ou l'autre des positions suivantes :
- une première position dans laquelle la ou les parties ouvertes 24 entrent en coïncidence avec la ou les orifices de la série d'orifices 3 pour ouvrir les orifices de série d'orifices 3, ou
- une deuxième position dans laquelle la ou les parties obturantes 25 entrent en coïncidence avec la ou les orifices de la série d'orifices 3 pour fermer les orifices de la série d'orifices 3.

Dans ces deux positions, la plaque 23 reste plaquée contre la série d'orifices 3.

Selon une variante de ce deuxième exemple, le ou les volets 18 comprennent une plaque 26 parallèle à un plan contenant la série d'orifices 4. De manière similaire à la première plaque 23, la plaque 26 comprend au moins une partie ouverte 27 et au moins une partie obturante 28.

Dans cette variante, le module d'actionnement 8 étant également configuré pour déplacer la plaque 26 parallèlement au plan contenant la série d'orifices 4 de façon que la plaque 26 occupe alternativement au moins l'une ou l'autre des positions suivantes :
- une première position dans laquelle la ou les parties ouvertes 27 entrent en coïncidence avec la ou les orifices de la série d'orifices 4 pour ouvrir les orifices de série d'orifices 4, lorsque la plaque 23 est dans sa deuxième position, ou
- une deuxième position dans laquelle la ou les parties obturantes 28 entrent en coïncidence avec la ou les orifices de la série d'orifices 4 pour fermer les orifices de la série d'orifices 4, lorsque la plaque 23 est dans la première position.

Dans ces deux positions, la plaque 26 reste plaquée contre la série d'orifices 4.

Comme représenté sur les figures 7 à 10, le module d'actionnement 8 peut déplacer le ou les volets 7 et/ou le ou les volets 18 par rotation. Le module d'actionnement 8 peut donc comprendre un moteur possédant un arbre moteur A perpendiculaire au(x) volets 7 et 18 et apte à entraîner la plaque 23 et/ou la plaque 26 en rotation autour de l'axe de l'arbre moteur A ou d'un arbre B parallèle à l'arbre moteur A par l'intermédiaire d'une pignonnerie. De préférence, le moteur est un moteur à courant continu.

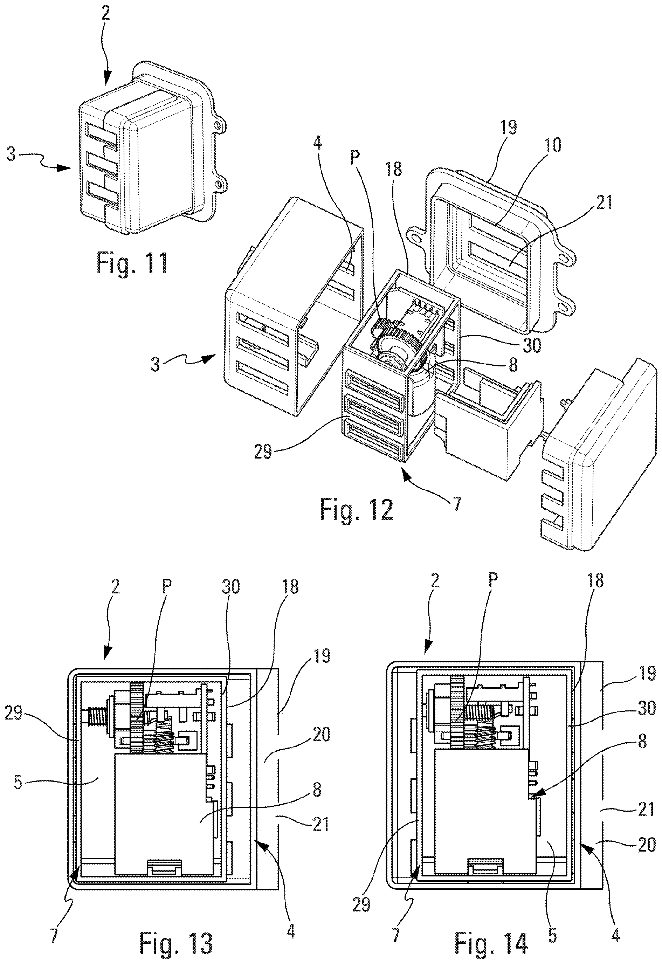

Selon un troisième exemple (figures 11 à 14), le ou les volets 7 comprennent une plaque obturante 29 parallèle à un plan contenant la série d'orifices 3.

Dans ce troisième exemple, le moyen d'actionnement 8 est configuré pour déplacer la plaque obturante 29 en translation selon une normale du plan contenant la série d'orifices 3 de façon que la plaque obturante 29 occupe au moins l'une ou l'autre des positions suivantes :
- une première position dans laquelle la plaque obturante 29 est plaquée contre la ou les orifices de la série d'orifices 3 pour fermer les orifices de série d'orifices 3, ou
- une deuxième position dans laquelle la plaque obturante 29 est éloignée de la ou des orifices de la série 3 d'orifices pour ouvrir les orifices de la série d'orifices 3.

Dans une variante du troisième exemple, le ou les volets 18 comprennent en outre une plaque obturante 30 parallèle à un plan contenant la série d'orifices 4.

Dans cette variante, le moyen d'actionnement 8 est également configuré pour déplacer la plaque obturante 30 en translation selon une normale du plan contenant la série d'orifices 4 de façon que la plaque obturante 30 occupe au moins l'une ou l'autre des positions suivantes :
- une première position dans laquelle la plaque obturante 30 est plaquée contre la ou les orifices de la série d'orifices 4 pour fermer les orifices de série d'orifices 4 lorsque que la plaque obturante 29 est dans sa deuxième position, ou
- une deuxième position dans laquelle la plaque obturante 30 est éloignée contre la ou les orifices de la série d'orifices 4 pour ouvrir les orifices de la série d'orifices 4 lorsque que la plaque obturante 29 est dans sa première position.

Comme représenté sur la figure11 à 14, dans ce troisième exemple, le ou les volets 7 et/ou le ou les volets 18 peuvent être entraînés simultanément par translation par le module d'actionnement 8. Le module d'actionnement 8 peut donc comprendre un moteur possédant un arbre moteur A parallèle au(x) plaques obturantes 29 et 30 et apte à entraîner la plaque 29 et/ou la plaque 30 en translation par l'intermédiaire d'une pignonnerie P. De préférence, le moteur est un moteur à courant continu.

Ainsi, lorsque le ou les volets 7 sont ouverts, l'humidité 17 contenue dans le boîtier 15 du projecteur 16 entre dans la boîte 2 du dispositif 1.

Par exemple, l'humidité peut être absorbée par l'absorbeur d'humidité 6.

Par exemple, la chaleur émise par l'élément chauffant 9 est apte à transformer en vapeur d'eau l'humidité absorbée par l'absorbeur d'humidité 6. La vapeur d'eau 11 s'évacue alors par l'orifice 4 vers l'extérieur de la boîte 2.

Selon un mode de réalisation, l'élément chauffant 9 correspond à un composant du module d'actionnement 8 apte à chauffer lorsque le sous-module d'actionnement est activé.

L'élément chauffant 9 peut comprendre ou correspondre à une résistance thermique. La résistance thermique est configurée pour fonctionner en circuit ouvert lorsqu'elle atteinte une température prédéterminée.

Selon un autre exemple, l'élément chauffant 9 comprend un élément électromagnétique. L'élément électromagnétique peut être un électroaimant qui permet au module d'actionnement 8 de fermer le volet 7 lorsque ledit module d'actionnement 8 est activé.

L'absorbeur d'humidité 6 peut correspondre à un composant apte à absorber l'humidité, tel que le gel de silice. Ledit composant peut revêtir la surface intérieure de la boîte 2, mais il peut aussi être contenu dans un logement interne prévu à proximité de l'élément chauffant 9. La silice peut aussi être contenu dans ou sur un support adhésif apte à adhérer sur une surface contenue dans la chambre 5.

Selon un mode de réalisation (figure 2), le dispositif 1 comprend une membrane 10 obturant la série d'orifices 21. La membrane 10 est configurée pour laisser sortir de la chambre 20 la vapeur d'eau 11 présente dans la boîte 2. La vapeur d'eau contenue dans la boîte 2 et qui s'évacue par la série d'orifice 21 peut correspondre à l'humidité préalablement absorbée par l'absorbeur d'humidité 6 qui a été transformée en vapeur d'eau par la chaleur transmise par l'élément chauffant 9 ou à l'humidité contenue dans les chambres 5, 20 mais qui n'a pas été absorbée par l'absorbeur d'humidité 6.

La divulgation concerne également un projecteur de véhicule 16 comprenant un boîtier 15 fermé par une glace 13 et logeant au moins une source lumineuse 14 (figure 6).

Le boîtier fermé 15 comprend une paroi 12 à travers laquelle est fixée un dispositif 1 tel que décrit ci-dessus.

L'intérieur du boîtier 15 communique alors avec la chambre 5 de la première boîte 2 dudit dispositif 1 par la série d'orifices 3 et l'extérieur du boîtier 15 communique avec la chambre 5 de la première boîte 2 dudit dispositif 1 par la deuxième série d'orifices 4.

La présente description détaille différents modes de réalisation en référence à des figures et/ou des caractéristiques techniques. L'homme du métier comprendra que les diverses caractéristiques techniques des divers modes peuvent être combinées entre elles pour obtenir d'autres modes de réalisation, à moins que l'inverse ne soit explicitement mentionné ou que ces caractéristiques techniques ne soient incompatibles. De même, une caractéristique technique d'un mode de réalisation peut être isolée des autres caractéristiques techniques de ce mode de réalisation à moins que l'inverse ne soit mentionné. Dans la présente description, de nombreux détails spécifiques sont fournis à titre illustratif et nullement limitatif, de façon à détailler précisément la divulgation.

L'homme de métier comprendra cependant que la divulgation. peut être réalisée en l'absence d'un ou plusieurs de ces détails spécifiques ou avec des variantes. À d'autres occasions, certains aspects ne sont pas détaillés de façon à éviter d'obscurcir et alourdir la présente description et l'homme de métier comprendra que des moyens divers et variés pourront être utilisés et que la divulgation.

n'est pas limitée aux seuls exemples décrits.

Il doit être évident pour les personnes versées dans l'art que la présente divulgation.

permet des modes de réalisation sous de nombreuses autres formes spécifiques sans l'éloigner du domaine d'application de la divulgation. Par conséquent, les présents modes de réalisation doivent être considérés à titre d'illustration, mais peuvent être modifiés dans le domaine défini par la portée des revendications jointes, et la divulgation ne doit pas être limitée aux détails donnés ci-dessus.

## Revendications

1. Dispositif apte à être utilisé pour déshumidifier un boîtier fermé (15) de projecteur de véhicule (16) ou pour prévenir l'apparition d'humidité dans ledit boîtier fermé (15), le dispositif comprenant:
- une première boîte (2) définissant une première chambre (5), la première boîte (2) comportant au moins deux séries d'orifices (3, 4), chacune des séries d'orifices (3, 4) comprenant au moins un orifice, une première série d'orifices (3) étant configurée pour que la première chambre (5) communique avec un intérieur d'un boîtier fermé (15) et une deuxième série d'orifices (4) étant configurée pour que la première chambre (5) communique avec un extérieur du boîtier fermé (15),
- au moins un premier volet (7) configuré pour alternativement ouvrir le ou les orifices de la première série d'orifices (3) ou fermer de manière étanche le ou les orifices de la première série d'orifices (3),
- un module d'actionnement (8), configuré pour que le ou les premiers volets (7) ferment le ou les orifices de la première série d'orifices (3) lorsque le module d'actionnement (8) est activé,
- un élément chauffant (9) configuré pour émettre de la chaleur lorsque le module d'actionnement (8) est activé; **caractérisé en ce que** le dispositif comprend en outre
- une deuxième boîte (19) définissant une deuxième chambre (20), la deuxième boîte (19) étant configurée pour que la deuxième chambre (20) communique avec la première chambre (5) par la deuxième série d'orifices (4), la deuxième boîte (19) comprenant une troisième série d'orifices (21) configurée pour que la deuxième chambre (20) communique avec l'extérieur du boîtier fermé (15).

2. Dispositif selon la revendication 1, **caractérisé en ce qu'**il comprend au moins un deuxième volet (18) configuré pour, alternativement :
- ouvrir la deuxième série d'orifices (4) lorsque le ou les premiers volets (7) ferment la première série d'orifices (3), ou
- fermer la deuxième série d'orifices (4) lorsque le ou les premiers volets (7) ouvrent la première série d'orifices (3).

3. Dispositif selon la revendication 2, **caractérisé en ce que** le module d'actionnement (8) comprend :
- un sous-module de fermeture configuré pour fermer la première série d'orifices (3) par le ou les premiers volets (7) quand ledit module d'actionnement (8) est activé,
- un sous-module de rappel (22) configuré pour amener le ou les premiers volets (7) à ouvrir la première série d'orifices (3), quand ledit module d'actionnement (8) est inactivé.

4. Dispositif selon la revendication 3, **caractérisé en ce que** :
- le sous-module de fermeture est également configuré pour ouvrir la deuxième série d'orifices (4) par le ou les deuxièmes volets (18) quand ledit module d'actionnement (8) est activé,
- le sous-module de rappel (22) est également configuré pour amener le ou les deuxièmes volets (18) à fermer la deuxième série d'orifices (4) quand ledit module d'actionnement (8) est inactivé.

5. Dispositif selon la revendication 2, **caractérisé en ce que** le ou les premiers volets (7) comprennent une première plaque (23) parallèle à un plan contenant la première série d'orifices (3), la première plaque (23) comprenant au moins une première partie ouverte (24) et au moins une première partie obturante (25), le module d'actionnement (8) étant configuré pour déplacer la première plaque (23) parallèlement au plan contenant la première série d'orifices (3) de façon que la première plaque (23) occupe alternativement au moins l'une ou l'autre des positions suivantes :
- une première position dans laquelle la ou les premières parties ouvertes (24) entrent en coïncidence avec la ou les orifices de la première série d'orifices (3) pour ouvrir les orifices de première série d'orifices (3), ou
- une deuxième position dans laquelle la ou les premières parties obturantes (25) entrent en coïncidence avec la ou les orifices de la première série d'orifices (3) pour fermer les orifices de la première série d'orifices (3).

6. Dispositif selon la revendication 5, **caractérisé en ce que** le ou les deuxièmes volets (18) comprennent une deuxième plaque (26) parallèle à un plan contenant la deuxième série d'orifices (4), la deuxième plaque (26) comprenant au moins une deuxième partie ouverte (27) et au moins une deuxième partie obturante (28),
le module d'actionnement (8) étant également configuré pour déplacer la deuxième plaque (26) parallèlement au plan contenant la deuxième série d'orifices (4) de façon que la deuxième plaque (26) occupe alternativement au moins l'une ou l'autre des positions suivantes :
- une première position dans laquelle la ou les deuxièmes parties ouvertes (27) entrent en coïncidence avec la ou les orifices de la deuxième série d'orifices (4) pour ouvrir les orifices de deuxième série d'orifices (4), lorsque la première plaque (23) est dans sa deuxième position, ou
- une deuxième position dans laquelle la ou les deuxièmes parties obturantes (28) entrent en coïncidence avec la ou les orifices de la deuxième série d'orifices (4) pour fermer les orifices de la deuxième série d'orifices, lorsque la première plaque (23) est dans la première position.

7. Dispositif selon la revendication 2, **caractérisé en ce que** le ou les premiers volets (7) comprennent une première plaque obturante (29) parallèle à un plan contenant la première série d'orifices (3),
le module d'actionnement (8) étant configuré pour déplacer la première plaque obturante (29) selon une normale du plan contenant la première série d'orifices (3) de façon que la première plaque obturante (29) occupe au moins l'une ou l'autre des positions suivantes :
- une première position dans laquelle la première plaque obturante (29) est plaquée contre la ou les orifices de la première série d'orifices (3) pour fermer les orifices de première série d'orifices (3), ou
- une deuxième position dans laquelle la première plaque obturante (29) est éloignée de la ou des orifices de la première série (3) d'orifices pour ouvrir les orifices de la première série d'orifices (3).

8. Dispositif selon la revendication 7, **caractérisé en ce que** le ou les deuxièmes volets (18) comprennent une deuxième plaque obturante (30) parallèle à un plan contenant la deuxième série d'orifices (4),
le module d'actionnement (8) étant également configuré pour déplacer la deuxième plaque obturante (30) selon une normale du plan contenant la deuxième série d'orifices (4) de façon que la deuxième plaque obturante (30) occupe au moins l'une ou l'autre des positions suivantes:
- une première position dans laquelle la deuxième plaque obturante (30) est plaquée contre la ou les orifices de la deuxième série d'orifices (4) pour fermer les orifices de deuxième série d'orifices (4) lorsque que la première plaque obturante (29) est dans sa deuxième position, ou
- une deuxième position dans laquelle la deuxième plaque obturante (30) est éloignée contre la ou les orifices de la deuxième série d'orifices (4) pour ouvrir les orifices de la deuxième série d'orifices (4) lorsque que la première plaque obturante (29) est dans sa première position.

9. Dispositif selon l'un quelconque des revendications 1 ou 2, **caractérisé en ce que** l'élément chauffant (9) correspond à un composant du module d'actionnement (8) apte à chauffer lorsque le sous-module d'actionnement est activé.

10. Dispositif selon la revendication 2, **caractérisé en ce que** le module d'actionnement (8) comprend un moteur, et le moteur possède un arbre moteur (A) perpendiculaire au volet ou aux volets (7, 18) et est apte à entraîner le ou les premiers volets (7) et/ou le ou les deuxièmes volets (18) en rotation autour de l'axe de l'arbre moteur (A) ou autour d'un arbre (B) parallèle à l'arbre moteur (A) par l'intermédiaire d'une pignonnerie.

11. Dispositif selon la revendication 2, **caractérisé en ce que** le module d'actionnement (8) comprend un moteur, et le moteur possède un arbre moteur (A) parallèle au premier volet ou aux volets (7, 18) et est apte à entraîner le ou les premiers volets (7) et/ou le ou les deuxièmes volets (18) en translation par l'intermédiaire d'une pignonnerie (P).

12. Dispositif selon la revendication 10 ou 11, **caractérisé en ce que** le moteur fonctionne sur le courant continu.

13. Dispositif selon la revendication 1, caractérisé en ce l'élément chauffant (9) comprend un élément électromagnétique.

14. Projecteur de véhicule (16) comprenant un boîtier (15) fermé par une glace (13) et logeant au moins une source lumineuse (14), **caractérisé en ce que** le boîtier (15) comprend une paroi (12) à travers laquelle est fixée un dispositif apte à être utilisé pour déshumidifier ledit boîtier (15) ou pour prévenir l'apparition d'humidité dans ledit boîtier fermé (15) selon l'une quelconque des revendications 1 à 13, l'intérieur du boîtier (15) communiquant avec la première chambre (5) de la première boîte (2) dudit dispositif (1) par la première série d'orifices (3), l'extérieur du boîtier (15) communiquant avec la première chambre (5) par la deuxième série d'orifices (4).

## Patentansprüche

1. Vorrichtung, geeignet zur Verwendung zur Entfeuchtung eines geschlossenen Gehäuses (15) eines Fahrzeugscheinwerfers (16) oder zur Verhinderung des Auftretens von Feuchtigkeit in dem geschlossenen Gehäuse (15), wobei die Vorrichtung umfasst:
- ein erstes Gehäuse (2), das eine erste Kammer (5) definiert, wobei das erste Gehäuse (2) mindestens zwei Reihen von Öffnungen (3, 4) aufweist, wobei jede der Reihen von Öffnungen (3, 4) mindestens eine Öffnung umfasst, wobei eine erste Reihe von Öffnungen (3) so konfiguriert ist, dass die erste Kammer (5) mit einem Innenraum eines geschlossenen Gehäuses (15) in Verbindung steht, und eine zweite Reihe von Öffnungen (4) so konfiguriert ist, dass die erste Kammer (5) mit einem Außenraum des geschlossenen Gehäuses (15) in Verbindung steht,
- mindestens eine erste Klappe (7), die konfiguriert ist, um abwechselnd die Öffnung(en) der ersten Reihe von Öffnungen (3) zu öffnen oder die Öffnung(en) der ersten Reihe von Öffnungen (3) dichtend zu verschließen,
- ein Betätigungsmodul (8), das so konfiguriert ist, dass die erste(n) Klappe(n) (7) die Öffnung(en) der ersten Reihe von Öffnungen (3) schließt/schließen, wenn das Betätigungsmodul (8) aktiviert wird,
- ein Heizelement (9), das konfiguriert ist, um Wärme abzugeben, wenn das Betätigungsmodul (8) aktiviert wird; **dadurch gekennzeichnet, dass** die Vorrichtung ferner umfasst
- ein zweites Gehäuse (19), das eine zweite Kammer (20) definiert, wobei das zweite Gehäuse (19) so konfiguriert ist, dass die zweite Kammer (20) mit der ersten Kammer (5) über die zweite Reihe von Öffnungen (4) in Verbindung steht, wobei das zweite Gehäuse (19) eine dritte Reihe von Öffnungen (21) umfasst, die so konfiguriert ist, dass die zweite Kammer (20) mit der Außenseite des geschlossenen Gehäuses (15) in Verbindung steht.

2. Vorrichtung nach Anspruch 1, **dadurch gekennzeichnet, dass** sie mindestens eine zweite Klappe (18) umfasst, die konfiguriert ist, um abwechselnd folgende Schritte auszuführen:
- Öffnen der zweiten Reihe von Öffnungen (4), wenn die erste(n) Klappe(n) (7) die erste Reihe von Öffnungen (3) schließt/schließen; oder
- Schließen der zweiten Reihe von Öffnungen (4), wenn die erste(n) Klappe(n) (7) die erste Reihe von Öffnungen (3) öffnet/öffnen.

3. Vorrichtung nach Anspruch 2, **dadurch gekennzeichnet, dass** das Betätigungsmodul (8) umfasst:
- ein Schließ-Untermodul, das konfiguriert ist, um die erste Reihe von Öffnungen (3) mit der ersten Klappe oder den ersten Klappen (7) zu schließen, wenn das Betätigungsmodul (8) aktiviert ist,
- ein Rückstell-Untermodul (22), das konfiguriert ist, um die erste(n) Klappe(n) (7) zu veranlassen, die erste Reihe von Öffnungen (3) zu öffnen, wenn das Betätigungsmodul (8) inaktiv ist.

4. Vorrichtung nach Anspruch 3, **dadurch gekennzeichnet, dass**:
- das Schließ-Untermodul auch konfiguriert ist, um die zweite Reihe von Öffnungen (4) durch die zweite(n) Klappe(n) (18) zu öffnen, wenn das Betätigungsmodul (8) aktiviert ist,
- das Rückstell-Untermodul (22) auch konfiguriert ist, um zu bewirken, dass die zweite(n) Klappe(n) (18) die zweite Reihe von Öffnungen (4) schließt, wenn das Betätigungsmodul (8) inaktiv ist.

5. Vorrichtung nach Anspruch 2, **dadurch gekennzeichnet, dass** die erste(n) Klappe(n) (7) eine erste Platte (23) parallel zu einer Ebene umfasst, die die erste Reihe von Öffnungen (3) enthält, wobei die erste Platte (23) mindestens einen ersten offenen Abschnitt (24) und mindestens einen ersten dichtenden Abschnitt (25) umfasst, wobei das Betätigungsmodul (8) konfiguriert ist, um die erste Platte (23) parallel zu der Ebene zu bewegen, die die erste Reihe von Öffnungen (3) enthält, so dass die erste Platte (23) abwechselnd mindestens eine der folgenden Positionen einnimmt:
- eine erste Position, in der der oder die ersten offene(n) Abschnitt(e) (24) mit der Öffnung oder den Öffnungen der ersten Reihe von Öffnungen (3) in Deckung kommen, um die Öffnungen der ersten Reihe von Öffnungen (3) zu öffnen, oder
- eine zweite Position, in der der oder die erste(n) dichtende(n) Abschnitt(e) (25) mit der oder den Öffnung(en) der ersten Reihe von Öffnungen (3) in Deckung kommen, um die Öffnungen der ersten Reihe von Öffnungen (3) zu verschließen.

6. Vorrichtung nach Anspruch 5, **dadurch gekennzeichnet, dass** die zweite(n) Klappe(n) (18) eine zweite Platte (26) parallel zu einer Ebene umfasst, die die zweite Reihe von Öffnungen (4) enthält, wobei die zweite Platte (26) mindestens einen zweiten offenen Abschnitt (27) und mindestens einen zweiten dichtenden Abschnitt (28) umfasst,
wobei das Betätigungsmodul (8) auch konfiguriert ist, um die zweite Platte (26) parallel zu der Ebene zu bewegen, die die zweite Reihe von Öffnungen (4) enthält, so dass die zweite Platte (26) abwechselnd mindestens eine der folgenden Positionen einnimmt:
- eine erste Position, in der der oder die zweite(n) offene(n) Abschnitt(e) (27) mit der Öffnung oder den Öffnungen der zweiten Reihe von Öffnungen (4) in Deckung kommen, um die Öffnungen der zweiten Reihe von Öffnungen (4) zu öffnen, wenn sich die erste Platte (23) in ihrer zweiten Position befindet, oder
- eine zweite Position, in der der oder die zweite(n) dichtende(n) Abschnitt(e) (28) mit der oder den Öffnungen der zweiten Reihe von Öffnungen (4) in Deckung kommen, um die Öffnungen der zweiten Reihe von Öffnungen zu verschließen, wenn sich die erste Platte (23) in der ersten Position befindet.

7. Vorrichtung nach Anspruch 2, **dadurch gekennzeichnet, dass** die erste(n) Klappe(n) (7) eine erste Dichtplatte (29) parallel zu einer Ebene umfasst, die die erste Reihe von Öffnungen (3) enthält,
wobei das Betätigungsmodul (8) konfiguriert ist, um die erste Dichtplatte (29) entlang einer Normalen der Ebene zu bewegen, die die erste Reihe von Öffnungen (3) enthält, so dass die erste Dichtplatte (29) mindestens eine der folgenden Positionen einnimmt:
- eine erste Position, in der die erste Dichtplatte (29) gegen die Öffnung(en) der ersten Reihe von Öffnungen (3) gedrückt wird, um die Öffnungen der ersten Reihe von Öffnungen (3) zu verschließen, oder
- eine zweite Position, in der die erste Dichtplatte (29) von der oder den Öffnung(en) der ersten Reihe (3) von Öffnungen entfernt ist, um die Öffnungen der ersten Reihe von Öffnungen (3) zu öffnen.

8. Vorrichtung nach Anspruch 7, **dadurch gekennzeichnet, dass** die zweite(n) Klappe(n) (18) eine zweite Dichtplatte (30) parallel zu einer Ebene umfasst, die die zweite Reihe von Öffnungen (4) enthält,
wobei das Betätigungsmodul (8) auch konfiguriert ist, um die zweite Dichtplatte (30) entlang einer Normalen der Ebene zu bewegen, die die zweite Reihe von Öffnungen (4) enthält, so dass die zweite Dichtplatte (30) mindestens eine der folgenden Positionen einnimmt:
- eine erste Position, in der die zweite Dichtplatte (30) gegen die Öffnung(en) der zweiten Reihe von Öffnungen (4) gedrückt wird, um die zweite Reihe von Öffnungen (4) zu verschließen, wenn sich die erste Dichtplatte (29) in ihrer zweiten Position befindet, oder
- eine zweite Position, in der die zweite Dichtplatte (30) zu der/den Öffnung(en) der zweiten Reihe von Öffnungen (4) beabstandet ist, um die Öffnungen der zweiten Reihe von Öffnungen (4) zu öffnen, wenn sich die erste Dichtplatte (29) in ihrer ersten Position befindet.

9. Vorrichtung nach einem der Ansprüche 1 oder 2, **dadurch gekennzeichnet, dass** das Heizelement (9) einer Komponente des Betätigungsmoduls (8) entspricht, die geeignet ist, sich zu erwärmen, wenn das Betätigungs-Untermodul aktiviert wird.

10. Vorrichtung nach Anspruch 2, **dadurch gekennzeichnet, dass** das Betätigungsmodul (8) einen Motor umfasst, und der Motor eine Antriebswelle (A) aufweist, die senkrecht zu der Klappe oder den Klappen (7, 18) verläuft, und geeignet ist, die erste(n) Klappe(n) (7) und/oder die zweite(n) Klappe(n) (18) über ein Ritzel in Drehung um die Achse der Antriebswelle (A) oder um eine Welle (B) parallel zu der Antriebswelle (A) zu versetzen.

11. Vorrichtung nach Anspruch 2, **dadurch gekennzeichnet, dass** das Betätigungsmodul (8) einen Motor umfasst, und der Motor eine Motorwelle (A) parallel zu der ersten Klappe oder den Klappen (7, 18) besitzt und geeignet ist, die erste(n) Klappe(n) (7) und/oder die zweite(n) Klappe(n) (18) über ein Ritzel (P) translatorisch anzutreiben.

12. Vorrichtung nach Anspruch 10 oder 11, **dadurch gekennzeichnet, dass** der Motor mit Gleichstrom betrieben wird.

13. Vorrichtung nach Anspruch 1, **dadurch gekennzeichnet, dass** das Heizelement (9) ein elektromagnetisches Element umfasst.

14. Fahrzeugscheinwerfer (16), umfassend ein Gehäuse (15), das durch eine Scheibe (13) verschlossen ist und mindestens eine Lichtquelle (14) beherbergt, **dadurch gekennzeichnet, dass** das Gehäuse (15) eine Wand (12) umfasst, durch die eine Vorrichtung befestigt ist, die zur Verwendung zum Entfeuchten des Gehäuses (15) oder zum Verhindern des Auftretens von Feuchtigkeit in dem geschlossenen Gehäuse (15) nach einem der Ansprüche 1 bis 13 geeignet ist, wobei das Innere des Gehäuses (15) über die erste Reihe von Öffnungen (3) mit der ersten Kammer (5) des ersten Gehäuses (2) der Vorrichtung (1) in Verbindung steht und das Äußere des Gehäuses (15) über die zweite Reihe von Öffnungen (4) mit der ersten Kammer (5) in Verbindung steht.

## Claims

1. Device suitable for being used to dehumidify a closed casing (15) of a vehicle headlight (16) or to prevent the appearance of moisture in said closed casing (15), the device comprising:
- a first housing (2) defining a first chamber (5), the first housing (2) comprising at least two series of openings (3, 4), each of the series of openings (3, 4) comprising at least one opening, a first series of openings (3) being configured such that the first chamber (5) communicates with an inside of a closed casing (15) and a second series of openings (4) being configured such that the first chamber (5) communicates with an exterior of the closed casing (15),
- at least one first shutter (7) configured to alternatively open the opening(s) of the first series of openings (3) or sealingly close the opening(s) of the first series of openings (3),
- an actuation module (8) configured such that the first shutter(s) (7) close the opening(s) of the first series of openings (3) when the actuation module (8) is activated,
- a heating element (9) configured to emit heat when the actuation module (8) is activated; **characterized in that** the device further comprises
- a second housing (19) defining a second chamber (20), the second housing (19) being configured such that the second chamber (20) communicates with the first chamber (5) by means of the second series of openings (4), the second housing (19) comprising a third series of openings (21) configured such that the second chamber (20) communicates with the exterior of the closed casing (15).

2. Device according to claim 1, **characterized in that** it comprises at least one second shutter (18) configured to alternatively:
- open the second series of openings (4) when the first shutter(s) (7) close the first series of openings (3), or
- close the second series of openings (4) when the first shutter(s) (7) open the first series of openings (3).

3. Device according to claim 2, **characterized in that** the actuation module (8) comprises:
- a closure sub-module configured to close the first series of openings (3) by means of the first shutter(s) (7) when said actuation module (8) is activated,
- a return sub-module (22) configured to cause the first shutter(s) (7) to open the first series of openings (3) when said actuation module (8) is inactivated.

4. Device according to claim 3, **characterized in that**:
- the closure sub-module is also configured to open the second series of openings (4) by means of the second shutter(s) (18) when said actuation module (8) is activated,
- the return sub-module (22) is also configured to cause the second shutter(s) (18) to close the second series of openings (4) when said actuation module (8) is inactivated.

5. Device according to claim 2, **characterized in that** the first shutter(s) (7) comprise a first panel (23) parallel to a plane containing the first series of openings (3), the first panel (23) comprising at least one first open part (24) and at least one first blocking part (25), the actuation module (8) being configured to move the first panel (23) in parallel with the plane containing the first series of openings (3) such that the first panel (23) alternatively occupies at least one or the other of the following positions:
- a first position in which the first open part(s) (24) coincide with the opening(s) of the first series of openings (3) in order to open the openings of the first series of openings (3), or
- a second position in which the first blocking part(s) (25) coincide with the opening(s) of the first series of openings (3) in order to close the openings of the first series of openings (3).

6. Device according to claim 5, **characterized in that** the second shutter(s) (18) comprise a second panel (26) parallel to a plane containing the second series of openings (4), the second panel (26) comprising at least one second open part (27) and at least one second blocking part (28),
the actuation module (8) also being configured to move the second panel (26) in parallel with the plane containing the second series of openings (4) such that the second panel (26) alternatively occupies at least one or the other of the following positions:
- a first position in which the second open part(s) (27) coincide with the opening(s) of the second series of openings (4) in order to open the openings of the second series of openings (4) when the first panel (23) is in its second position, or
- a second position in which the second blocking part(s) (28) coincide with the opening(s) of the second series of openings (4) in order to close the openings of the second series of openings when the first panel (23) is in the first position.

7. Device according to claim 2, **characterized in that** the first shutter(s) (7) comprise a first blocking panel (29) parallel to a plane containing the first series of openings (3),
the actuation module (8) being configured to move the first blocking panel (29) along a normal of the plane containing the first series of openings (3) such that the first blocking panel (29) occupies at least one or the other of the following positions:
- a first position in which the first blocking panel (29) is set against the opening(s) of the first series of openings (3) in order to close the openings of the first series of openings (3), or
- a second position in which the first blocking panel (29) is moved away from the opening(s) of the first series (3) of openings in order to open the openings of the first series of openings (3).

8. Device according to claim 7, **characterized in that** the second shutter(s) (18) comprise a second blocking panel (30) parallel to a plane containing the second series of openings (4),
the actuation module (8) also being configured to move the second blocking panel (30) along a normal of the plane containing the second series of openings (4) such that the second blocking panel (30) occupies at least one or the other of the following positions:
- a first position in which the second blocking panel (30) is set against the opening(s) of the second series of openings (4) in order to close the openings of the second series of openings (4) when the first blocking panel (29) is in its second position, or
- a second position in which the second blocking panel (30) is moved away from the openings(s) of the second series of openings (4) in order to open the openings of the second series of openings (4) when the first blocking panel (29) is in its first position.

9. Device according to either claim 1 or claim 2, **characterized in that** the heating element (9) corresponds to a component of the actuation module (8) that is suitable for heating when the actuation sub-module is activated.

10. Device according to claim 2, **characterized in that** the actuation module (8) comprises a motor, and the motor has a motor shaft (A) perpendicular to the shutter(s) (7, 18) and is suitable for driving the first shutter(s) (7) and/or the second shutter(s) (18) in rotation about the axis of the motor shaft (A) or about a shaft (B) parallel to the motor shaft (A) by means of a gearing mechanism.

11. Device according to claim 2, **characterized in that** the actuation module (8) comprises a motor, and the motor has a motor shaft (A) parallel to the first shutter(s) (7, 18) and is suitable for driving the first shutter(s) (7) and/or the second shutter(s) (18) in translation by means of a gearing mechanism (P).

12. Device according to either claim 10 or claim 11, **characterized in that** the motor operates on direct current.

13. Device according to claim 1, **characterized in that** the heating element (9) comprises an electromagnetic element.

14. Vehicle headlight (16) comprising a casing (15) closed by a glass pane (13) and containing at least one light source (14), **characterized in that** the casing (15) comprises a wall (12) through which a device suitable for being used to dehumidify said casing (15) or to prevent the appearance of moisture in said closed casing (15) according to any of claims 1 to 13 is fixed, the inside of the casing (15) communicating with the first chamber (5) of the first housing (2) of said device (1) by means of the first series of openings (3), and the exterior of the casing (15) communicating with the first chamber (5) by means of the second series of openings (4).
